# EUROPÄISCHE PATENTSCHRIFT

(11) **EP 4 170 399 B1**
(45) Veröffentlichungstag und Bekanntmachung des Hinweises auf die Patenterteilung: **01.07.2026**
(21) Anmeldenummer: 22187735.0
(22) Anmeldetag: 29.07.2022
(51) Int. Cl.: G02B 6/36, G02B 6/38, H01R 13/436

(54) **STECKVERBINDER**
CONNECTOR
CONNECTEUR ENFICHABLE

(30) Priorität: 19.10.2021 DE 102021127030
(43) Veröffentlichungstag der Anmeldung: 26.04.2023
(73) Patentinhaber: MD ELEKTRONIK GmbH, 84478 Waldkraiburg (DE)
(72) Erfinder: Pritz, Helmut, 84539 Ampfing (DE); Halbig, Thomas, 92345 Dietfurt (DE)

(56) Entgegenhaltungen:
- EP-A1- 3 800 744
- DE-B4- 112015 000 415
- JP-A- 2008 243 692
- JP-A- 2016 090 760
- US-A- 5 934 946
- US-A1- 2020 112 125

## Beschreibung

### Technisches Gebiet

Die Erfindung betrifft einen Steckverbinder zur Verbindung mit einem Gegensteckverbinder. Der Steckverbinder eignet sich im besonderen Maße zur Verbindung von optischen und elektrischen Leitungen.

### Stand der Technik

Um Leitungen, die bspw. optische und/oder elektrische Signale übertragen, entweder miteinander oder mit einem Bauteil zu verbinden, werden in der Regel Steckverbinder verwendet, die mit einem komplementären Gegensteckverbinder lösbar verbunden werden können und somit eine signalübertragende Verbindung herstellen. Hierzu ist die Leitung, die verbunden werden soll mit dem Steckverbinder signalleitend verbunden. Der Gegensteckverbinder ist hingegen mit dem zu verbindenden Partner signalleitend verbunden, sodass beim Verbinden von dem Steckverbinder und dem Gegensteckverbinder eine signalübertragende Verbindung zwischen der Leitung und dem jeweiligen zu verbindenden Partner erzeugt wird.

Insbesondere bei Steckverbindern, bei denen sichergestellt werden muss, dass sowohl die Verbindung zwischen der Leitung und dem Steckverbinder und/oder zwischen dem Steckverbinder und dem Gegensteckverbinder korrekt vorliegt, kommen häufig zusätzliche Sicherungssysteme zum Einsatz. Beispielsweise kann eine Sekundärverriegelung vorgesehen sein, die für eine zusätzliche Befestigung der Leitung am oder im Steckverbinder sorgen kann. Weiterhin kann der Steckverbinder eine Steckverhinderung aufweisen, die eine Verbindung von Steckverbinder und Gegensteckverbinder verhindert, wenn die Leitung nicht korrekt mit dem Steckverbinder und/oder der zu verbindende Partner nicht korrekt mit dem Gegensteckverbinder verbunden ist. Weiterhin kann es je nach verfügbarem Bauraum erforderlich sein, dass mehrere Leitungen mithilfe eines Steckverbinders mit dem entsprechenden komplementären Gegensteckverbinder verbunden werden.

JP 2016 090 760 A1 offenbart einem optischen Verbinder, in dem ein Eingriffsabschnitt, der konvex von einem Ende eines stationären Elements in Richtung einer optischen Achse einer optischen Faser vorsteht, in dem stationären Element ausgebildet ist. Ein Eingriffsabschnitt ist in einem Gehäuse angeordnet. Ein zweiter Eingriffsabschnitt ist an einem anderen Ende in Richtung der optischen Achse der optischen Faser des stationären Elements angeordnet. Ein zweiter Eingriffsabschnitt ist in dem Gehäuse angeordnet. Wenn der Eingriffsabschnitt mit dem Eingriffsabschnitt in Eingriff steht und der zweite Eingriffsabschnitt mit dem zweiten Eingriffsabschnitt in einem vorläufigen Eingriffszustand in Eingriff steht, in dem das stationäre Element in einen Einpassabschnitt des Gehäuses eingepresst und darin gehalten wird, wird ein endgültiger Eingriffszustand erreicht.

DE 11 2015 000 415 B4 offenbart einen Passaufbau für einen optischen Stecker, in dem ein erster optischer Stecker, der für das Halten eines ersten Lichtwellenleiters in einem ersten Gehäuse ausgebildet ist, und ein zweiter optischer Stecker, der für das Halten eines zweiten Lichtwellenleiters in einem zweiten Gehäuse ausgebildet ist, steckverbunden werden, wodurch der erste Lichtwellenleiter und der zweite Lichtwellenleiter optisch miteinander verbunden werden. Der erste optische Stecker umfasst ein erstes Fixierungsglied, das separat von dem ersten Gehäuse vorgesehen ist und ausgebildet ist, um den ersten Lichtwellenleiter an dem ersten Gehäuse zu fixieren, indem es an dem ersten Gehäuse angebracht wird und sein Sperrzustand von einem vorübergehend gesperrten Zustand zu einem tatsächlich gesperrten Zustand versetzt wird. Der zweite optische Stecker umfasst ein zweites Fixierungsglied, das separat von dem zweiten Gehäuse vorgesehen ist und ausgebildet ist, um den zweiten Lichtwellenleiter an dem zweiten Gehäuse zu fixieren, indem es an dem zweiten Gehäuse angebracht wird und sein Sperrzustand von einem vorübergehend gesperrten Zustand zu einem tatsächlich gesperrten Zustand versetzt wird.

US 5 934 946 A offenbart eine Steckverbinderanordnung mit einem männlichen und einem weiblichen Stecker. Der vollständige Eingriff eines männlichen und eines weiblichen Steckers wird verhindert, wenn Klemmenhalter nicht vollständig eingesetzt sind. Ein Erfassungsvorsprung ragt aus dem vorderen Ende eines Buchsengehäuses heraus. Wenn sich ein Steckerhalter in einer vorübergehenden Halteposition befindet, befindet sich ein Buchsenkontaktvorsprung innerhalb einer Passungserfassungsrille, die mit einem Haubenelement verbunden ist. Wenn die Halterung nicht vollständig in das Steckergehäuse eingepasst ist, berühren sich der Erfassungsvorsprung und der Buchsenkontaktvorsprung, wodurch verhindert wird, dass die Buchsen und Stecker in der richtigen Position eingepasst werden.

Sowohl die zusätzlichen Sicherungssysteme als auch die Anforderung mit einem Steckverbinder mehrere Leitungen verbinden zu können, steigern jedoch die Komplexität des Steckverbinders deutlich. Insbesondere bei kleinen Steckverbindern, wie sie beispielsweise bei Lichtwellenleitungen und/oder Hochfrequenzleitungen zum Einsatz kommen, entsteht durch die umfangreichen Funktionen ein hoher Komplexitätsgrad und damit verbunden ein erhöhter Fertigungsaufwand des Steckverbinders.

### Beschreibung der Erfindung

Es ist daher eine Aufgabe der vorliegenden Erfindung einen Steckverbinder bereitzustellen, der Zusatzfunktionen, wie zum Beispiel eine Sekundärverriegelung und/oder eine Steckverhinderung aufweist, jedoch weiterhin einen einfachen und kompakten Aufbau aufweist.

Die erfindungsgemäße Aufgabe wird durch einen Steckverbinder mit den Merkmalen des unabhängigen Anspruchs gelöst. Weitere vorteilhafte Ausführungen lassen sich den Unteransprüchen, der Beschreibung sowie den beiliegenden Zeichnungen entnehmen.

Ein erfindungsgemäßer Steckverbinder zur Verbindung mit einem Gegensteckverbinder weist ein Steckverbindergehäuse auf. Das Steckergehäuse weist zumindest eine Kontaktkammer zur Aufnahme einer Kontaktanordnung auf. Die Kontaktanordnung weist bevorzugt zumindest eine Signalleitung auf. Sofern der Steckverbinder mit einem Gegensteckverbinder verbunden ist, ist es bevorzugt, dass die Kontaktanordnung des Steckverbinders zumindest derart mit einer Kontaktanordnung des Gegensteckverbinders verbindbar ist, dass ein Signal von einer Signalleitung des Steckverbinders auf eine Signalleitung des Gegensteckverbinders übertragbar ist. Bei der Signalleitung kann es sich um eine elektrische oder optische Leitung handeln. Die Kontaktkammer erstreckt sich von einer Kontaktseite in Richtung einer Steckseite. Unter der Kontaktseite kann in diesem Zusammenhang eine Seite des Steckverbindergehäuses verstanden werden, an der die Kontaktanordnung in die Kontaktkammer eingebracht werden kann. Unter Steckseite kann eine Seite des Steckverbindergehäuses verstanden werden, an der das Steckverbindergehäuse mit einem Gegensteckverbinder verbunden werden kann. Die Kontaktkammer ist vorzugsweise sowohl über die Kontaktseite als auch über die Steckseite zugänglich. Der erfindungsgemäße Steckverbinder weist weiterhin eine Sekundärsicherung auf. Die Sekundärsicherung weist zwei Befestigungsarme und zumindest ein Sicherungselement auf. Das Sicherungselement ist zwischen den Befestigungsarmen angeordnet. Die Sekundärsicherung ist zwischen einer Vorrastposition und einer Endrastposition bewegbar. Die Bewegung erfolgt dabei senkrecht zu einer Steckachse des Steckverbinders. Zumindest einer der beiden Befestigungsarme weist eine erste Rasteinheit auf, die in der Endrastposition mit einer am Steckverbindergehäuse angeordneten ersten Gegenrasteinheit verbunden ist. Die erste Rasteinheit kann beispielsweise als Rast- oder Schnapphaken ausgeführt sein, wobei die erste Gegenrasteinheit komplementär zur ersten Rasteinheit ausgeführt ist, so dass eine mechanische und insbesondere lösbare Verbindung zwischen der ersten Rasteinheit und der ersten Gegenrasteinheit ermöglicht ist. Zumindest einer der beiden Befestigungsarme weist ein Sperrelement auf, das sich parallel zu der Steckachse von dem Befestigungsarm, an dem das Sperrelement angeordnet ist, wegerstreckt. Unter der Steckachse kann eine Bewegungsachse verstanden werden, entlang derer der Steckverbinder oder Gegensteckverbinder bewegt werden, um eine Verbindung zwischen Steckverbinder und Gegensteckverbinder herzustellen. Das Sperrelement blockiert in der Vorraststellung eine Verbindung mit dem Gegensteckverbinder. Das Steckverbindergehäuse weist zumindest eine Zugangsöffnung auf, die sich in die Kontaktkammer erstreckt. Vorzugsweise ist die Zugangsöffnung an einer Seite des Steckverbinders angeordnet, die sich von der Steckseite und der Kontaktseite unterscheidet. Das Sicherungselement erstreckt sich in der Endrastposition durch die Zugangsöffnung in die Kontaktkammer, wodurch die Kontaktanordnung in der Kontaktkammer verriegelt ist.

Der erfindungsgemäße Steckverbinder zeichnet sich vor allem dadurch aus, dass mithilfe der Sekundärsicherung neben einer primären Verriegelung der Kontaktanordnung in der Kontaktkammer eine sekundäre Verriegelung ermöglicht wird, wobei ein hoher Freiheitsgrad bei der Auslegung Kontaktkammer besteht und damit verbunden ein hoher Freiheitsgrad bei der Ausgestaltung der Kontaktanordnung vorliegt. Weiterhin bleibt sichergestellt, dass eine Verbindung zwischen dem Steckverbinder und dem Gegensteckverbinder nur möglich ist, wenn die Sekundärsicherung in der Endrastposition angeordnet ist und damit sichergestellt ist, dass die Kontaktanordnung verriegelt ist.

Die Zugangsöffnung kann auf einer ersten Gehäuseseite angeordnet sein, die an die Steckseite und/oder Kontaktseite angrenzt. Die Kontaktseite und die Steckseite können gegenüberliegend zueinander angeordnet sein. Es ist jedoch ebenso möglich, dass die Kontaktseite und die Steckseite in einem Winkel, insbesondere einem rechten Winkel, angeordnet sind, wenn der Steckverbinder als gewinkelter Steckverbinder ausgeführt ist.

Um sicherzustellen, dass die Kontaktanordnung in der Vorraststellung der Sekundärsicherung problemlos in die Kontaktkammer eingebracht oder aus der Kontaktkammer entfernt werden kann, kann das Sicherungselement in der Vorraststellung außerhalb der Kontaktkammer angeordnet sein. Weiterhin kann das Sicherungselement auch außerhalb der Zugangsöffnung angeordnet sein.

Das Steckverbindergehäuse weist eine Steckkammer auf, in die ein Gegensteckverbindergehäuse des Gegensteckverbinders zumindest teilweise einbringbar ist. Die Steckkammer kann darüber hinaus Kodierungselemente aufweisen, um sicherzustellen, dass nur ein Gegensteckverbindergehäuse mit komplementären Kodierungselementen mit dem Steckverbindergehäuse verbindbar ist. Das Sperrelement kann in der Steckkammer angeordnet sein. Das Gegensteckverbindergehäuse kann dabei bevorzugt sowohl in der Vorrastposition als auch in der Endrastposition in der Steckkammer eingebracht werden.

Das Sperrelement ist über eine Seitenöffnung im Steckverbindergehäuse in die Steckkammer einbringbar . Die Seitenöffnung ist bevorzugt im Bereich der Steckkammer angeordnet. Weiterhin ist die Seitenöffnung bevorzugt auf einer Gehäuseseite des Steckverbindergehäuses angeordnet, die an die Steckseite angrenzt. Die Seitenöffnung kann eine Kontur aufweisen, die zumindest teilweise einer Außenkontur des Sperrelements entspricht.

Das Sperrelement kann bevorzugt in der Vorrastposition über die Seitenöffnung in die Steckkammer einbringbar sein. Es ist daher besonders bevorzugt, dass das Sperrelement und die Seitenöffnung in der Vorrastposition fluchtend zueinander angeordnet sind.

Das Sperrelement ist mithilfe einer Schwenkbewegung in die Steckkammer einbringbar. Zumindest der Befestigungsarm, der das Sperrelement aufweist, ist daher um eine Schwenkachse, die senkrecht zur Steckachse angeordnet ist verschwenkbar. Die Schwenkachse ist weiterhin parallel zur Steckseite angeordnet.

Das Steckverbindergehäuse kann in der Steckkammer eine Stufe aufweisen, wobei das Sperrelement in der Endrastposition bevorzugt, fluchtend zu der Stufe angeordnet ist. Die Stufe kann sowohl parallel als auch senkrecht zur Steckachse angeordnet sein. Das Gegensteckverbindergehäuse kann einen Oberflächenabschnitt aufweisen, der eine komplementäre Form zur Stufe und zum fluchtend zur Stufe angeordneten Sperrelement aufweist. Innerhalb der Stufe oder zwischen der Stufe und einer Gehäuseinnenwandung kann eine Ausnehmung angeordnet sein, in die das Sperrelement in der Endrastposition einbringbar ist.

Zumindest einer der beiden Befestigungsarme kann eine zweite Rasteinheit aufweisen, die in der Vorrastposition mit einer am Steckverbindergehäuse angeordneten zweiten Gegenrasteinheit verbunden ist. Bevorzugt ist eine Verbindung zwischen der zweiten Rasteinheit und der zweiten Gegenrasteinheit in der Endrastposition gelöst. Die zweite Gegenrasteinheit ist bevorzugt komplementär zur zweiten Rasteinheit ausgeführt, so dass eine mechanische und lösbare Verbindung, insbesondere durch Formschluss und/oder Kraftschluss zwischen Rasteinheit und Gegenrasteinheit realisierbar ist.

Weiterhin kann einer der beiden Befestigungsarme die zweite Rasteinheit und der jeweils andere Befestigungsarm kann eine dritte Rasteinheit aufweisen. In der Vorrastposition kann die zweite Rasteinheit mit der am Steckverbindergehäuse angeordneten zweiten Gegenrasteinheit angeordnet sein. Die dritte Rasteinheit kann in der Vorrastposition mit einer am Steckverbindergehäuse angeordneten dritten Gegenrasteinheit verbunden sein. In der Endrastposition ist ebenfalls bevorzugt, dass die dritte Rasteinheit von der dritten Gegenrasteinheit gelöst ist. Weiterhin ist bevorzugt, dass sich die zweite Rasteinheit von der dritten Rasteinheit unterscheidet.

Die Kontaktanordnung kann zwei Signalleitungen aufweisen, so dass zwei Signalleitungen am Steckverbinder mit zwei Signalleitungen am Gegensteckverbinder verbindbar sind. Das Steckverbindergehäuse kann zwei Zugangsöffnungen und die Sekundärsicherung zwei Sicherungselemente aufweisen, die zumindest in der Endrastposition jeweils in einer der Zugangsöffnungen angeordnet sind. Die Signalleitungen sind im Bereich der Kontaktanordnung parallel zueinander angeordnet. Weiterhin ist bevorzugt, dass die Kontaktanordnung einen Kontaktträger aufweist, der beide Signalleitungen aufnimmt.

Das Steckverbindergehäuse kann an einer zweiten und dritten Gehäuseseite jeweils einen Führungsabschnitt aufweisen. In jedem Führungsabschnitt kann jeweils einer der Befestigungsarme angeordnet sein. Es ist hierbei bevorzugt, dass sich die Befestigungsarme bei einer Bewegung zwischen Vorrastposition und Endrastposition entlang der Führungsabschnitte bewegen. Die erste, die zweite und/oder die dritte Gegenrasteinheit können innerhalb der Führungsabschnitte angeordnet sein. Die Führungsabschnitte können als Nut oder als Kanal ausgebildet sein.

Die zweite und die dritte Gehäuseseite können gegenüberliegend zueinander und an die erste Gehäuseseite angrenzend angeordnet sein. Die Führungsabschnitte können sich von der ersten Gehäuseseite bis zu einer Gehäuseseite, die der ersten Gehäuseseite gegenüberliegt, erstrecken.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigen:
- Figur 1: eine erste Ausführungsform eines erfindungsgemäßen Steckverbinders in einer Explosivansicht;
- Figur 2: den erfindungsgemäßen Steckverbinder gemäß der ersten Ausführungsform in einer Schnittansicht;
- Figur 3: den erfindungsgemäßen Steckverbinder gemäß der ersten Ausführungsform in einer weiteren Schnittansicht;
- Figur 4: den erfindungsgemäßen Steckverbinder gemäß der ersten Ausführungsform in einer Vorraststellung in einer dreidimensionalen Ansicht;
- Figur 5: den erfindungsgemäßen Steckverbinder gemäß der ersten Ausführungsform in einer Endraststellung in einer dreidimensionalen Ansicht;
- Figur 6: den erfindungsgemäßen Steckverbinder gemäß der ersten Ausführungsform in einer Vorraststellung in einer weiteren dreidimensionalen Ansicht; und
- Figur 7: den erfindungsgemäßen Steckverbinder gemäß der ersten Ausführungsform in einer Endraststellung in einer weiteren dreidimensionalen Ansicht.

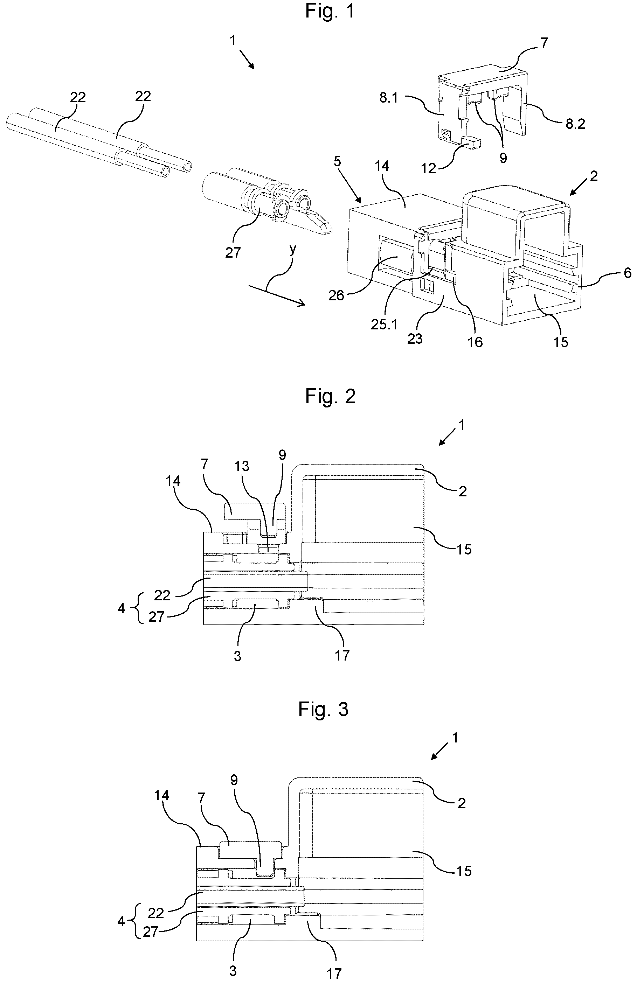

Figur 1 zeigt eine erste Ausführungsform eines erfindungsgemäßen Steckverbinders 1 in einer dreidimensionalen Explosivdarstellung. Der Steckverbinder 1 besitzt ein Steckverbindergehäuse 2. In dem Steckverbindergehäuse 2 kann eine Kontaktanordnung angeordnet werden. Die Kontaktanordnung besteht in der vorliegenden Ausführungsform aus einem Kontaktträger 27 und zwei Signalleitungen 22. Die beiden Signalleitungen 22 werden gemeinsam von dem Kontaktträger 27 aufgenommen. Bei den Signalleitungen 22 handelt es sich um Lichtwellenleiter zur Übertragung von Lichtsignalen. Das Steckverbindergehäuse 2 besitzt zwei Primärverriegelungen 26 in Form von Schnapphaken, die die Kontaktanordnung innerhalb des Steckverbindergehäuses 2 lösbar befestigen. Die Kontaktanordnung kann an einer Kontaktseite 5 in das Steckverbindergehäuse 2 parallel zu einer Steckachse y eingebracht werden. Der Kontaktseite 5 gegenüberliegend ist eine Steckseite 6 angeordnet, an der der Steckverbinder 1 mit einem nicht gezeigten Gegensteckverbinder verbindbar ist. Das Steckverbindergehäuse 2 besitzt eine Steckkammer 15, in den ein nicht gezeigtes Gegensteckverbindergehäuse einbringbar ist. Der erfindungsgemäße Steckverbinder 1 besitzt weiterhin eine Sekundärsicherung 7. Die Sekundärsicherung 7 besitzt zwei Befestigungsarme 8.1; 8.2. Zwischen den Befestigungsarmen 8.1; 8.2 sind zwei Sicherungselemente 9 angeordnet. Weiterhin ist an einem Befestigungsarm 8.1 ein Sperrelement 12 angeordnet. Die Sekundärsicherung 7 ist an dem Steckverbindergehäuse 2 zwischen einer Vorraststellung und einer Endraststellung bewegbar. Die Befestigungsarme 8.1; 8.2 sind hierbei in Führungsabschnitten 25.1; 25.2 angeordnet und werden bei der Bewegung zwischen der Endraststellung und der Vorraststellung innerhalb der Führungsabschnitte 25.1; 25.2 geführt.

Figur 2 zeigt die erste Ausführungsform des erfindungsgemäßen Steckverbinders 1 in einer Schnittansicht. Die Schnittebene verläuft hierbei parallel zur Steckachse y. Die Kontaktanordnung 4 ist innerhalb einer Kontaktkammer 3 im Steckverbindergehäuse 2 angeordnet. Die Sekundärsicherung 7 ist in der Vorrastposition angeordnet. Das Sicherungselement 9 ist fluchtend mit einer Zugangsöffnung 13 angeordnet, die auf einer ersten Gehäuseseite 14 des Steckverbindergehäuses 2 angeordnet ist. Die Zugangsöffnung 13 ermöglicht einen Zugang über die erste Gehäuseseite 14 in die Kontaktkammer 3.

Figur 3 zeigt die erste Ausführungsform des erfindungsgemäßen Steckverbinders 1 in der Schnittansicht gemäß Figur 2, wobei die Sekundärsicherung 7 in der Endrastposition angeordnet ist. Das Sicherungselement 9 erstreckt sich durch die Zugangsöffnung 13 in die Kontaktkammer 3. Der Kontaktträger 27 weist zwei Abschnitte mit einem Außendurchmesser auf, der größer ist als ein Zwischenabschnitt, der zwischen diesen beiden Abschnitten angeordnet ist. Da das Sicherungselement 9 im Bereich des Zwischenabschnitts angeordnet ist, kann die Kontaktanordnung 4 aus der Kontaktkammer nicht mehr entfernt werden, so dass das Sicherungselement 9 die Kontaktanordnung 4 in der Kontaktkammer 3 befestigt.

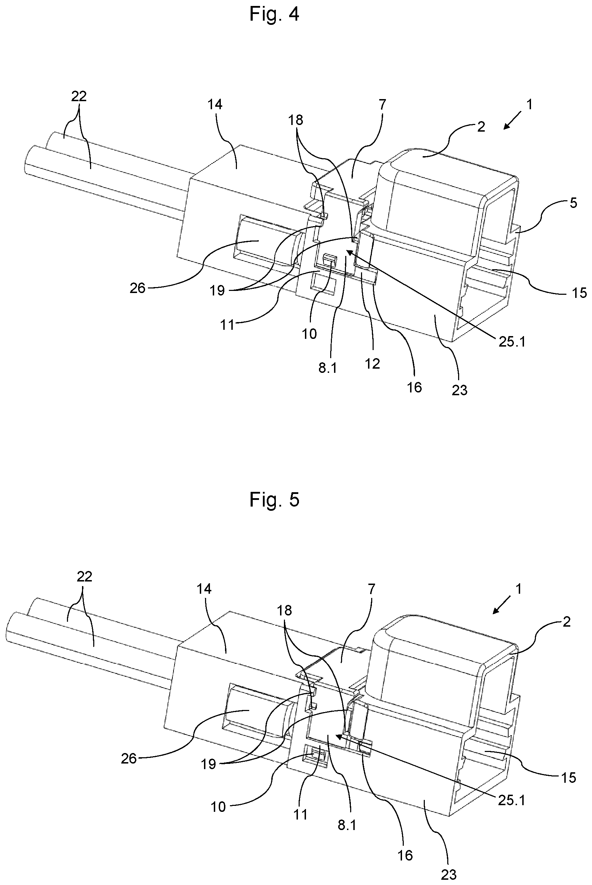

Figur 4 zeigt eine dreidimensionale Ansicht der ersten Ausführungsform des erfindungsgemäßen Steckverbinders 1. Dem Betrachter ist dabei eine zweite Gehäuseseite 23 zugewandt. Die Sekundärsicherung 7 ist in der Vorrastposition angeordnet. Der dem Betrachter zugewandte Befestigungsarm 8.1 ist in einem Führungsabschnitt 25.1 angeordnet, der an der zweiten Gehäuseseite 26 des Steckverbindergehäuses 2 ausgebildet ist. Der Befestigungsarm 8.1 besitzt eine erste Rasteinheit 10, die aus einem Rasthaken besteht, der an einer dem Steckverbindergehäuse 2 abgewandten Seite des Befestigungsarms 8.1 angeordnet ist. Weiterhin umfasst der Befestigungsarm 8.1 eine zweite Rasteinheit 18, die aus einer Rastnase und einem Anschlag besteht. Die Rastnase und der Anschlag sind gegenüberliegend zueinander an Schmalseiten des Befestigungsarms 8.1 angeordnet. Die zweite Rasteinheit 18 ist in der Vorraststellung mit einer zweiten Gegenrasteinheit 19, das am Steckverbindergehäuse 2 angeordnet ist, lösbar verbunden. Mithilfe der Verbindung zwischen der zweiten Rasteinheit 18 und der zweiten Gegenrasteinheit 19 wird die Sekundärsicherung 7 in der Vorrastposition gehalten. Das Sperrelement 12 ist durch eine Seitenöffnung 16 in der Steckkammer 15 eingebracht. Das Sperrelement 12 wurde durch ein Verschwenken des Befestigungsarms 8.1 senkrecht zur Steckachse y und parallel zur Steckseite 6 in einem nicht gezeigten Prozessschritt über die Seitenöffnung 16 in der Steckkammer 15 eingebracht. Durch das Sperrelement 12 wird eine Verbindung des Steckverbinders 1 mit einem Gegensteckverbinder blockiert, solange die Sekundärsicherung 7 in der Vorraststellung angeordnet ist.

Figur 5 zeigt eine weitere dreidimensionale Ansicht der ersten Ausführungsform des erfindungsgemäßen Steckverbinders 1, wobei die zweite Gehäuseseite 23 dem Betrachter zugewandt ist. Die Sekundärsicherung 7 ist in der Endrastposition angeordnet. Die erste Rasteinheit 10 ist mit einer ersten Gegenrasteinheit 11 am Steckverbindergehäuse 2 lösbar verbunden, so dass die Sekundärsicherung 7 in der Endrastposition gehalten wird. Die Verbindung zwischen der zweiten Rasteinheit 18 und der zweiten Gegenrasteinheit 19 ist in der Endrastposition gelöst.

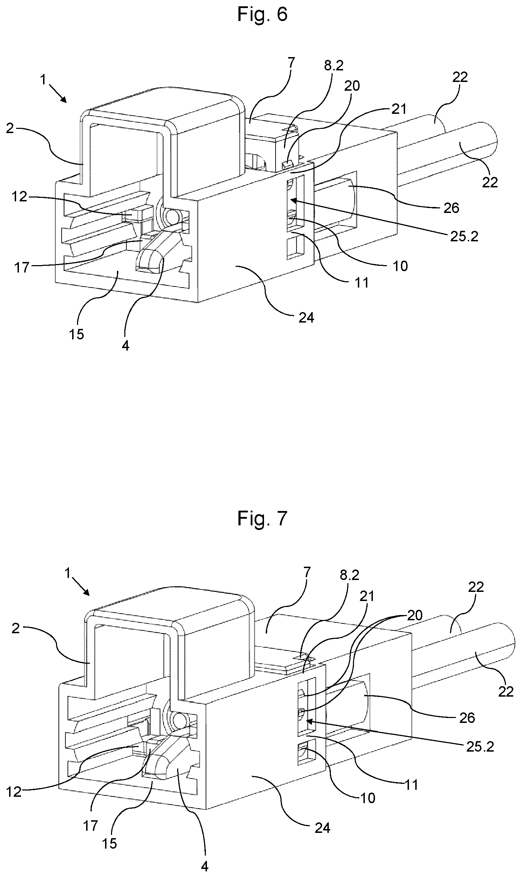

Figur 6 zeigt eine weitere dreidimensionale Ansicht der ersten Ausführungsform des erfindungsgemäßen Steckverbinders 1, wobei eine dritte Gehäuseseite 24 dem Betrachter zugewandt ist. Die Sekundärsicherung 7 ist in der Vorrastposition angeordnet. Der Befestigungsarm 8.2 besitzt eine dritte Rasteinheit 20, die in der Vorrastposition mit einer dritten Gegenrasteinheit 21 am Steckverbindergehäuse 2 angeordnet ist. Die dritte Rasteinheit 20 unterscheidet sich in ihrem Aufbau von der zweiten Rasteinheit 18 durch zwei Rasthaken, zwischen denen die dritte Gegenrasteinheit 21 in Form eines Bügels angeordnet wird.

Figur 7 zeigt eine weitere dreidimensionale Ansicht der ersten Ausführungsform des erfindungsgemäßen Steckverbinders 1, wobei die dritte Gehäuseseite 24 dem Betrachter zugewandt ist, die Sekundärsicherung 7 jedoch in der Endrastposition angeordnet ist. Die Verbindung zwischen der dritten Rasteinheit 20 und der dritten Gegenrasteinheit 21 ist in der Endrastposition gelöst. Der Befestigungsarm 8.2 besitzt jedoch ebenfalls eine erste Rasteinheit 10, die mit einer Gegenrasteinheit 11, die an der dritten Gehäuseseite 24 des Steckverbindergehäuses 2 angeordnet ist, lösbar verbunden ist. Das Sperrelement 12 ist fluchtend mit einer in der Steckkammer 15 angeordneten Stufe 17 angeordnet. Das Sperrelement 12 gibt somit die Steckkammer 15 frei, sodass der erfindungsgemäße Steckverbinder 1 mit einem Gegensteckverbinder verbindbar ist.

### BEZUGSZEICHENLISTE

- 1: Steckverbinder
- 2: Steckverbindergehäuse
- 3: Kontaktkammer
- 4: Kontaktanordnung
- 5: Kontaktseite
- 6: Steckseite
- 7: Sekundärsicherung
- 8: Befestigungsarme
- 9: Sicherungselement
- 10: Erste Rasteinheit
- 11: Erste Gegenrasteinheit
- 12: Sperrelement
- 13: Zugangsöffnung
- 14: Erste Gehäuseseite
- 15: Steckkammer
- 16: Seitenöffnung
- 17: Stufe
- 18: Zweite Rasteinheit
- 19: Zweite Gegenrasteinheit
- 20: Dritte Rasteinheit
- 21: Dritte Gegenrasteinheit
- 22: Signalleitung
- 23: Zweite Gehäuseseite
- 24: Dritte Gehäuseseite
- 25: Führungsabschnitt
- 26: Primärverriegelung
- 27: Kontaktträger

## Patentansprüche

1. Steckverbinder (1) zur Verbindung mit einem Gegensteckverbinder, mit
einem Steckverbindergehäuse (2), das zumindest eine Kontaktkammer (3) zur Aufnahme einer Kontaktanordnung (4) aufweist, die sich von einer Kontaktseite (5) in Richtung einer Steckseite (6) erstreckt und
einer Sekundärsicherung (7), die zwei Befestigungsarme (8.1; 8.2) und zumindest ein Sicherungselement (9), das zwischen den Befestigungsarmen (8.1; 8.2) angeordnet ist, aufweist,
wobei
die Sekundärsicherung (7) zwischen einer Vorrastposition und einer Endrastposition senkrecht zu einer Steckachse (y) bewegbar ist,
das Steckverbindergehäuse (2) zumindest eine Zugangsöffnung (13) aufweist, die mit der Kontaktkammer (3) verbunden ist,
sich das Sicherungselement (9) in der Endrastposition durch die Zugangsöffnung (13) in die Kontaktkammer erstreckt und die Kontaktanordnung (4) in der Kontaktkammer (3) verriegelt **dadurch gekennzeichnet, dass**
beide Befestigungsarme (8.1; 8.2) eine erste Rasteinheit (10) aufweisen, die in der Endrastposition mit einer am Steckverbindergehäuse (2) angeordneten ersten Gegenrasteinheit (11) verbunden sind,
zumindest einer der beiden Befestigungsarme (8.1; 8.2) ein Sperrelement (12) aufweist, das sich parallel zu der Steckachse (y) von diesem Befestigungsarm (8.1; 8.2) wegerstreckt,
das Sperrelement (12) in der Vorraststellung eine Verbindung mit dem Gegensteckverbinder blockiert,
das Steckverbindergehäuse (2) eine Steckkammer (15) aufweist, in die ein Gegensteckverbindergehäuse des Gegensteckverbinders zumindest teilweise einbringbar ist,
das Sperrelement (12) in der Steckkammer (15) angeordnet ist,
das Sperrelement (12) über eine Seitenöffnung (16) im Steckverbindergehäuse (2) in die Steckkammer (15) einbringbar ist und
das Sperrelement (12) mithilfe einer Schwenkbewegung des Befestigungsarms (8.1; 8.2) um eine Schwenkachse, die senkrecht zur Steckachse (y) und parallel zur Steckseite (6) angeordnet ist, in die Steckkammer (15) einbringbar ist.

2. Steckverbinder (1) nach dem vorhergehenden Anspruch, wobei die Zugangsöffnung (13) auf einer ersten Gehäuseseite (14) angeordnet ist, die an die Steckseite (6) und/oder Kontaktseite (5) angrenzt.

3. Steckverbinder (1) nach einem der vorhergehenden Ansprüche, wobei das Sicherungselement (9) in der Vorraststellung außerhalb der Kontaktkammer (3) angeordnet ist.

4. Steckverbinder (1) nach dem vorhergehenden Anspruch, wobei das Sperrelement (12) in der Vorrastposition über die Seitenöffnung (16) in die Steckkammer (15) einbringbar ist.

5. Steckverbinder (1) nach einem der vorhergehenden Ansprüche, wobei das Steckverbindergehäuse (2) in der Steckkammer (15) eine Stufe (17) aufweist und das Sperrelement (12) in der Endrastposition fluchtend zu der Stufe (17) angeordnet ist.

6. Steckverbinder (1) nach einem der vorhergehenden Ansprüche, wobei zumindest einer der beiden Befestigungsarme (8.1; 8.2) eine zweite Rasteinheit (18) aufweist, die in der Vorrastposition mit einer am Steckverbindergehäuse (2) angeordneten zweiten Gegenrasteinheit (19) verbunden ist.

7. Steckverbinder (1) nach dem vorhergehenden Anspruch, wobei einer der Befestigungsarme (8.1) die zweite Rasteinheit (18) und der jeweils andere Befestigungsarm (8.2) eine dritte Rasteinheit (20) aufweisen, wobei in der Vorrastposition die zweite Rasteinheit (18) mit einer am Steckverbindergehäuse (2) angeordneten zweiten Gegenrasteinheit (19) und die dritte Rasteinheit (20) mit einer am Steckverbindergehäuse (2) angeordneten dritten Gegenrasteinheit (21) verbunden ist.

8. Steckverbinder (1) nach einem der vorhergehenden Ansprüche, wobei die Kontaktanordnung (4) zumindest zwei, insbesondere parallel zueinander angeordnete, Signalleitungen (22) aufweist.

9. Steckverbinder (1) nach einem der vorhergehenden Ansprüche, wobei das Steckverbindergehäuse (2) an einer zweiten und dritten Gehäuseseite (23; 24) jeweils einen Führungsabschnitt (25.1; 25.2) aufweist in denen jeweils einer der Befestigungsarme (8.1; 8.2) angeordnet ist.

10. Steckverbinder (1) nach dem vorhergehenden Anspruch, wobei die zweite und die dritte Gehäuseseite (23; 24) gegenüberliegend zueinander und an die erste Gehäuseseite (14) angrenzend angeordnet sind.

## Claims

1. Plug-in connector (1) for connection to a counterpart plug-in connector, having
a plug-in-connector housing (2) which has at least one contact chamber (3) for receiving a contact arrangement (4), said at least one contact chamber extending from a contact side (5) in the direction of a plug-in side (6), and
a secondary securing arrangement (7) which has two fastening arms (8.1; 8.2) and has at least one securing element (9) arranged between the fastening arms (8.1; 8.2),
wherein
the secondary securing arrangement (7) is movable between a preliminary latching position and a final latching position perpendicularly to a plug-in axis (y),
the plug-in-connector housing (2) has at least one access opening (13) which is connected to the contact chamber (3),
the securing element (9), in the final latching position, extends into the contact chamber through the access opening (13) and locks the contact arrangement (4) in the contact chamber (3), **characterized in that**
both fastening arms (8.1; 8.2) have a first latching unit (10) which, in the final latching position, is connected to a first counterpart latching unit (11) which is arranged on the plug-in-connector housing (2),
at least one of the two fastening arms (8.1; 8.2) has a blocking element (12) which extends away from this fastening arm (8.1; 8.2) parallel to the plug-in axis (y),
the blocking element (12), in the preliminary latching position, blocks a connection to the counterpart plug-in connector,
the plug-in-connector housing (2) has a plug-in chamber (15) into which a counterpart-plug-in-connector housing of the counterpart plug-in connector is at least partially introducible,
the blocking element (12) is arranged in the plug-in chamber (15),
the blocking element (12) is introducible into the plug-in chamber (15) via a side opening (16) in the plug-in-connector housing (2), and
the blocking element (12) is introducible into the plug-in chamber (15) with the aid of a pivoting movement of the fastening arm (8.1; 8.2) about a pivot axis perpendicular to the plug-in axis (y) and parallel to the plug-in side (6).

2. Plug-in connector (1) according to the preceding claim, wherein the access opening (13) is arranged on a first housing side (14) which adjoins the plug-in side (6) and/or contact side (5).

3. Plug-in connector (1) according to either of the preceding claims, wherein, in the preliminary latching position, the securing element (9) is arranged outside the contact chamber (3).

4. Plug-in connector (1) according to the preceding claim, wherein, in the preliminary latching position, the blocking element (12) is introducible into the plug-in chamber (15) via the side opening (16).

5. Plug-in connector (1) according to one of the preceding claims, wherein the plug-in-connector housing (2) has a step (17) in the plug-in chamber (15) and, in the final latching position, the blocking element (12) is arranged in alignment with the step (17).

6. Plug-in connector (1) according to one of the preceding claims, wherein at least one of the two fastening arms (8.1; 8.2) has a second latching unit (18) which, in the preliminary latching position, is connected to a second counterpart latching unit (19) which is arranged on the plug-in-connector housing (2).

7. Plug-in connector (1) according to the preceding claim, wherein one of the fastening arms (8.1) has the second latching unit (18) and the respectively other fastening arm (8.2) has a third latching unit (20), wherein, in the preliminary latching position, the second latching unit (18) is connected to a second counterpart latching unit (19) which is arranged on the plug-in-connector housing (2) and the third latching unit (20) is connected to a third counterpart latching unit (21) which is arranged on the plug-in-connector housing (2).

8. Plug-in connector (1) according to one of the preceding claims, wherein the contact arrangement (4) has at least two signal lines (22) which are in particular arranged parallel to one another.

9. Plug-in connector (1) according to one of the preceding claims, wherein, on a second and third housing side (23; 24), the plug-in-connector housing (2) has in each case one guide portion (25.1; 25.2) in which in each case one of the fastening arms (8.1; 8.2) is arranged.

10. Plug-in connector (1) according to the preceding claim, wherein the second and third housing sides (23; 24) are arranged opposite one another and adjoining the first housing side (14).

## Revendications

1. Connecteur mâle (1) destiné à être connecté à un connecteur mâle homologue, avec
un boîtier (2) de connecteur mâle, qui comporte au moins une chambre de contact (3) destinée à recevoir un ensemble de contact (4), qui s'étend depuis un côté de contact (5) en direction d'un côté d'enfichage (6) et
un système de blocage secondaire (7), qui comporte deux bras de fixation (8.1 ; 8.2) et au moins un élément de blocage (9), qui est disposé entre les bras de fixation (8.1 ; 8.2),
le moyen de blocage secondaire (7) pouvant être déplacé entre une position de pré-encliquetage et une position d'encliquetage final perpendiculairement à un axe d'enfichage (y),
le boîtier (2) de connecteur mâle comportant au moins une ouverture d'accès (13), qui est connectée à la chambre de contact (3),
l'élément de blocage (9) s'étendant, dans la position d'encliquetage final, à travers l'ouverture d'accès (13) dans la chambre de contact et verrouillant l'ensemble de contact (4) dans la chambre de contact (3), **caractérisé en ce que**
les deux bras de fixation (8.1 ; 8.2) comportent une première unité d'encliquetage (10) qui, dans la position d'encliquetage final, est connectée à une première unité d'encliquetage homologue (11) disposée sur le boîtier (2) de connecteur mâle,
au moins un des deux bras de fixation (8.1 ; 8.2) comporte un élément d'arrêt (12), qui s'étend parallèlement à l'axe d'enfichage (y) en s'éloignant dudit bras de fixation (8.1 ; 8.2),
l'élément d'arrêt (12) bloque une connexion avec le connecteur mâle homologue dans la position de pré-encliquetage,
le boîtier (2) de connecteur mâle comporte une chambre d'enfichage (15), dans laquelle un boîtier de connecteur mâle homologue du connecteur mâle homologue peut être introduit au moins en partie,
l'élément d'arrêt (12) est disposé dans la chambre d'enfichage (15),
l'élément d'arrêt (12) peut être introduit dans la chambre d'enfichage (15) par une ouverture latérale (16) dans le boîtier (2) de connecteur mâle et
l'élément d'arrêt (12) peut être introduit dans la chambre d'enfichage (15) à l'aide d'un mouvement de pivotement du bras de fixation (8.1 ; 8.2) autour d'un axe de pivotement, qui est disposé perpendiculairement à l'axe d'enfichage (y) et parallèlement au côté enfichage (6).

2. Connecteur mâle (1) selon la revendication précédente, l'ouverture d'accès (13) étant disposée sur un premier côté de boîtier (14), qui jouxte le côté d'enfichage (6) et/ou le côté de contact (5).

3. Connecteur mâle (1) selon l'une des revendications précédentes, l'élément de blocage (9) étant disposé à l'extérieur de la chambre de contact (3) dans la position de pré-encliquetage.

4. Connecteur mâle (1) selon la revendication précédente, l'élément d'arrêt (12) pouvant être introduit dans la chambre d'enfichage (15) par l'ouverture latérale (16) dans la position de pré-encliquetage.

5. Connecteur mâle (1) selon l'une des revendications précédentes, le boîtier (2) de connecteur mâle comportant un gradin (17) dans la chambre d'enfichage (15) et l'élément d'arrêt (12) étant disposé en alignement avec le gradin (17) dans la position d'encliquetage final.

6. Connecteur mâle (1) selon l'une des revendications précédentes, au moins un des deux bras de fixation (8.1 ; 8.2) comportant une deuxième unité d'encliquetage (18) qui, dans la position de pré-encliquetage, est connectée à une deuxième unité d'encliquetage homologue (19) disposée sur le boîtier (2) de connecteur mâle.

7. Connecteur mâle (1) selon la revendication précédente, un des bras de fixation (8.1) comportant la deuxième unité d'encliquetage (18) et l'autre bras de fixation (8.2) respectif comportant une troisième unité d'encliquetage (20), la deuxième unité d'encliquetage (18) étant connectée à une deuxième unité d'encliquetage homologue (19) disposée sur le boîtier (2) de connecteur mâle et la troisième unité d'encliquetage (20) étant connectée à une troisième unité d'encliquetage homologue (21) disposée sur le boîtier (2) de connecteur mâle dans la position de pré-encliquetage.

8. Connecteur mâle (1) selon l'une des revendications précédentes, l'ensemble de contact (4) comportant au moins deux lignes de signaux (22), disposées en particulier parallèlement l'une à l'autre.

9. Connecteur mâle (1) selon l'une des revendications précédentes, le boîtier (2) de connecteur mâle comportant sur un deuxième et un troisième côté de boîtier (23 ; 24) respectivement une section de guidage (25.1 ; 25.2), dans lesquelles est disposé respectivement un des bras de fixation (8.1 ; 8.2).

10. Connecteur mâle (1) selon la revendication précédente, le deuxième et le troisième côté de boîtier (23 ; 24) étant disposés en vis-à-vis l'un par rapport à l'autre et de manière à jouxter le premier côté de boîtier (14) .
